# DEMANDE DE BREVET EUROPEEN

(11) **EP 0 981 944 A1**
(43) Date de publication de la demande: **01.03.2000**
(21) Numéro de dépôt: 99390015.8
(22) Date de dépôt: 16.07.1999
(51) Int. Cl.: A01D 34/64, A01D 34/68

(54) **Tondeuse a gazon autoportée légère, procédé de fabrication et kit de mise en oeuvre**

(30) Priorité: 28.08.1998 FR 9810808
(71) Demandeur: GRANJA, Société Anonyme, F-31270 Cugnaux (FR)
(72) Inventeur: Eymard, Bruno, 31830 Plaisance du Touch (FR); Valena, Gilbert, 31830 Plaisance du Touch (FR)
(74) Mandataire: Cabinet BARRE LAFORGUE & associés

(57) **Abrégé**

L'invention concerne une tondeuse à gazon autoportée comprenant un moteur (2) adapté pour pouvoir entraîner au moins une lame de tonte, au moins un essieu moteur, un carter de lame (1) comprenant essentiellement une coque rigide portant le moteur (2), un siège (13) porté par un châssis secondaire (12), monté directement sur l'essieu moteur (7) et s'étendant au-delà du carter de lame (1) pour être porté directement par au moins une roue directionnelle (10). L'invention s'étend à un procédé et à un kit permettant de fabriquer une tondeuse autoportée à partir d'une cellule de tondeuse autrotractée connue.

## Description

L'invention concerne une tondeuse à gazon autoportée, c'est-à-dire une machine roulante motorisée automobile à conducteur porté comprenant des moyens pour couper l'herbe de la surface sur laquelle elle se déplace.

Les tondeuses à gazon autoportées connues sont des véhicules conçus comme des petits tracteurs destinés à être pilotés par un conducteur porté sur des pelouses à tondre.

Elles comportent en général un châssis portant : un moteur thermique fixé au châssis en position arrière ; un essieu arrière entraîné par le moteur par l'intermédiaire d'un différentiel et, le plus souvent, d'une boîte de vitesses ; un essieu avant directionnel associé à une direction ; un carter de lame inférieur fixé au châssis entre les essieux avant et arrière et dans lequel au moins une lame de tonte rotative à axe vertical est montée et reliée au moteur par une transmission mécanique pour l'entraîner ; un siège conducteur disposé au-dessus de l'essieu arrière ; des moyens de pilotage et de commande du moteur ; et une carrosserie couvrant le moteur, les essieux et le carter de lame. En outre, il doit être prévu des moyens de réglage de la hauteur de coupe, ainsi qu'un dispositif de sécurité assurant l'arrêt automatique du moteur en l'absence de conducteur sur le siège. Ce dispositif de sécurité est en général réalisé sous la forme d'un contacteur électrique placé sous le siège conducteur et rappelé en position de sécurité où il relie électriquement l'allumage du moteur à la masse lorsqu'aucun conducteur n'est assis sur le siège.

L'ensemble est relativement lourd et complexe, nécessite un moteur thermique de forte puissance (classiquement d'au moins 10CV (7355W) et pouvant aller jusqu'à 25CV (18387,5W), une batterie et un démarreur électrique.

Les tondeuses à gazon autoportées connues sont ainsi d'un coût considérablement plus élevé (de l'ordre de 5 à 15 fois) que celui des tondeuses à gazon poussées ou autotractées à conducteur marchant, et sont réservées en général aux utilisateurs tels que les professionnels ayant de grandes surfaces à tondre.

Ainsi, WO-98/09496 décrit une tondeuse autoportée comprenant un premier élément de châssis arrière portant le moteur, la batterie et le réservoir, et sur lequel est rapporté et fixé un carter de lame de tonte accouplée au moteur par l'intermédiaire d'une transmission à courroie, et un deuxième élément de châssis portant le siège conducteur, la direction de la tondeuse, et le réglage de la hauteur de coupe, superposé au premier élément sur lequel il est en appui à l'arrière par des ressorts de suspension et auquel il est articulé pivotant autour d'un axe horizontal transversal à l'avant du premier élément, de façon à réaliser une suspension assurant le confort du conducteur. Le premier élément de châssis est dimensionné spécialement -notamment pour recevoir et supporter le deuxième élément de châssis- et n'est pas formé uniquement du carter de lame.

Il est à noter en outre que les tondeuses à gazon autoportées connues sont moins maniables et ne permettent pas une tonte satisfaisante autour des obstacles parfois nombreux même sur les grandes surfaces à tondre. Elles sont en outre d'un encombrement et d'un poids importants rendant leur transport et leur stockage plus difficiles.

A l'inverse, les tondeuses à gazon poussées ou autotractées à conducteur marchant, sont moins onéreuses, mais d'utilisation plus pénible.

On a déjà cherché à simplifier les tondeuses à gazon autoportées connues pour en abaisser le coût en ajoutant un châssis doté d'un siège sur une tondeuse tractée (DE-U-29521119 ou JP-04075522). Néanmoins, ces propositions se sont toutes soldées en pratique par un échec du fait qu'une cellule de tondeuse autotractée n'est pas conçue pour supporter le poids d'un conducteur et n'est pas suffisamment résistante. En outre, les dimensions d'une telle cellule sont insuffisantes pour assurer la stabilité du montage envisagé. De surcroît, les tondeuses autotractées n'ayant pas de roues directionnelles, la transformation des roues avant montées sur le carter de lame en roues directionnelles nécessite un montage relativement complexe et fragile non adapté aux sollicitations qu'il est amené à subir, et qui ne procure qu'une faible maniabilité. Par ailleurs, la superposition du siège au-dessus du carter de lame et du moteur grève l'accessibilité aux organes principaux (réservoirs, câble de démarrage,...) de la tondeuse qui sont conçus à l'origine pour être accessibles par le dessus du moteur. Enfin, une telle modification soulève des problèmes de respect des normes de sécurité de fonctionnement qui imposent notamment que le moteur s'arrête automatiquement dès que le conducteur descend du siège. A ce titre, le danger représenté par une telle modification de tondeuse autotractée est encore plus grand dans la mesure où le carter de lame restant dégagé et le siège étant à faible hauteur du sol, le risque est important que les pieds d'un conducteur restant assis sur le siège puissent passer sous le carter de lame et être blessés par la lame.

Dans ce contexte, l'invention vise à proposer une tondeuse à gazon autoportée qui soit beaucoup moins onéreuse que les tondeuses à gazon autoportées connues, présente un prix intermédiaire entre celui des tondeuses à gazon à conducteur marchant et celui des tondeuses à gazon autoportées connues, mais qui soit suffisamment résistante, stable et maniable.

L'invention vise ainsi à proposer une tondeuse à gazon autoportée pouvant être fabriquée à faible coût, notamment par simples modifications et adjonctions à une cellule de tondeuse autotractée connue.

Plus particulièrement, l'invention vise à proposer une transformation de tondeuse à gazon autotractée en tondeuse à gazon autoportée dans laquelle le poids du conducteur est parfaitement supporté, qui présente une stabilité suffisante, soit résistante, maniable et d'utilisation simple et commode.

L'invention vise aussi à proposer une tondeuse à gazon autoportée dont le stockage, le transport et l'entretien sont faciles.

L'invention vise aussi à proposer une tondeuse à gazon autoportée présentant une maniabilité comparable ou même supérieure à celle des tondeuses à gazon à conducteur marchant.

L'invention vise en particulier à proposer une tondeuse à gazon autoportée dont l'utilisation peut être aussi avantageuse pour des surfaces à tondre de faibles dimensions (par exemple de 100 m² à 2000 m²), et notamment qui puisse satisfaire la majorité du marché des particuliers pour lesquels l'acquisition d'une tondeuse à gazon autoportée connue ne se justifiait pas.

Pour ce faire, l'invention concerne une tondeuse à gazon autoportée comprenant :
- au moins trois roues adaptées pour permettre à la tondeuse de rouler, et comprenant au moins une roue directionnelle,
- un moteur adapté pour pouvoir entraîner au moins une lame de tonte rotative à axe de rotation au moins sensiblement vertical, et au moins un essieu moteur auquel au moins une roue motrice est accouplée,
- un carter de lame adapté pour circonscrire l'espace balayé par la(les) lame(s) de tonte, ce carter de lame comprenant essentiellement une coque rigide portant le moteur et l'essieu moteur,
- un siège de réception d'un conducteur, porté par un châssis secondaire,
- des moyens de pilotage de la tondeuse par un conducteur assis sur le siège,
- le carter de lame et le châssis secondaire formant une structure rigide sur laquelle l'essieu moteur est monté, cette structure rigide étant adaptée pour pouvoir être supportée par les roues.
caractérisée en ce que :
- le châssis secondaire est monté directement sur l'essieu moteur,
- à l'opposé de l'essieu moteur, le châssis secondaire comprend une partie qui s'étend au-delà du carter de lame et est porté directement par chaque roue directionnelle, chacune des roues directionnelles étant montée directement sur cette partie du châssis secondaire, une partie du carter de lame opposée à l'essieu moteur étant fixée suspendue au châssis secondaire, de sorte que le poids du châssis secondaire, du siège et du conducteur est directement réparti sur les roues sans générer de contraintes substantielles sur le carter de lame.

Ainsi, une tondeuse autoportée selon l'invention peut être formée d'une cellule de type connu de tondeuse autotractée (carter de lame, moteur -notamment moteur thermique-, essieu moteur et roues) associée à un châssis secondaire portant un siège conducteur, à la place de la barre de manoeuvre et de pilotage manuel des tondeuses autotractées connues. Il a en effet été constaté en pratique que grâce à l'invention, contrairement aux principes communément admis jusqu'à maintenant, qu'une simple cellule de tondeuse autotractée de faible puissance (classiquement de l'ordre de 3CV à 7CV ( 2200 à 5150 W) pour les moteurs thermiques équipant les tondeuses autotractées connues), est capable de supporter et de transporter un conducteur, un siège et un châssis secondaire de faible poids, et qu'il n'est pas nécessaire, pour une simple tondeuse à gazon, d'adopter une structure lourde et complexe traditionnelle de véhicule dès lors que l'on souhaite pouvoir porter un conducteur.

Il est à noter à ce titre que le châssis secondaire étant monté non pas sur la coque rigide du carter de lame, mais directement sur l'essieu moteur, et que les roues directionnelles étant montées sur le châssis secondaire, le châssis secondaire, le siège et le conducteur ne reposent en aucune manière sur le carter de lame.

De plus, le châssis secondaire étant prolongé au-delà du carter de lame longitudinalement pour le montage de la (des) roue(s) directionnelle(s), la tondeuse peut être dimensionnée longitudinalement et latéralement de façon appropriée pour lui assurer une stabilité suffisante. Le montage du châssis secondaire sur l'essieu moteur permet aussi de dimensionner latéralement le châssis secondaire et éventuellement de modifier simplement la voie des roues de l'essieu moteur, par exemple par prolongation de l'essieu moteur et/ou élargissement des roues motrices (notamment par adjonction de roues supplémentaires). Les roues directionnelles étant montées sur le châssis secondaire peuvent faire l'objet d'un montage mécanique approprié suffisamment résistant et conférant une bonne maniabilité à la tondeuse. Le châssis secondaire étant monté sur l'essieu moteur, le montage du carter de lame à ce châssis secondaire peut être réalisé de façon à permettre un bonne accessibilité aux organes principaux, et notamment à autoriser un pivotement relatif du châssis secondaire par rapport au carter de lame autour de l'essieu arrière de façon à faciliter l'accès en partie supérieure du moteur et de ses accessoires.

Avantageusement et selon l'invention, la tondeuse est caractérisée en ce que :
- le châssis secondaire est articulé à l'essieu moteur -notamment à l'essieu moteur arrière- autour d'un axe transversal horizontal -notamment un axe transversal horizontal arrière-,
- à l'opposé de l'essieu arrière -notamment à l'avant-, le carter de lame et le châssis secondaire sont associés rigidement par des moyens d'association adaptés pour autoriser leur dissociation et le pivotement du châssis secondaire par rapport au carter de lame autour de l'axe transversal horizontal, en vue de dégager l'accès au moteur porté par le carter de lame.

Avantageusement et selon l'invention, le châssis secondaire est articulé à l'extérieur de chaque roue de l'essieu moteur porté par le carter de lame, selon un axe confondu avec l'axe de rotation de la roue.

Avantageusement et selon l'invention, la tondeuse est caractérisée en ce que l'essieu moteur étant un essieu arrière moteur, le châssis secondaire est articulé à l'essieu arrière moteur autour d'un axe transversal horizontal arrière, en ce que le châssis secondaire s'étend vers l'avant au-delà du carter de lame, en ce que la partie avant du carter de lame est fixée suspendue au châssis secondaire, et en ce qu'au moins une roue directionnelle avant est montée à l'avant du châssis secondaire. Le châssis secondaire s'étend vers l'avant au-delà du carter de lame sur une distance suffisante pour permettre le confort du conducteur, la stabilité de la tondeuse, et le montage des roues avant sur le châssis secondaire. A l'arrière, le châssis secondaire et le carter de lame (la coque rigide formant ce carter de lame) sont associés rigidement par l'intermédiaire de l'essieu arrière portant le carter de lame et le châssis secondaire.

Rien n'empêche néanmoins dans une variante non préférentielle de l'invention, de disposer l'essieu moteur à l'avant et les roues directionnelles à l'arrière.

Dans une tondeuse autoportée selon l'invention, le moteur n'est pas fixé au châssis secondaire, mais est directement porté par la coque rigide du carter de lame. Ainsi, une tondeuse selon l'invention est aussi avantageusement caractérisée en ce que le moteur est porté par le carter de lame en position au moins sensiblement centrale, et de façon à présenter un arbre moteur rotatif s'étendant au moins sensiblement verticalement vers le bas sous le carter de lame, et en ce qu'une lame de tonte est associée à l'arbre rnoteur de façon à ce que son axe de rotation corresponde à celui de l'arbre moteur. Avantageusement et selon l'invention, la lame de tonte est directement accouplée à l'arbre moteur dont elle est solidaire en rotation et le châssis secondaire s'étend au-dessus et à l'arrière du moteur de façon que le siège soit disposé au-dessus et à l'arrière du moteur.

Dans une tondeuse selon l'invention, le carter de lame rigide et le châssis secondaire forment ensemble une structure rigide apte à porter le conducteur, le moteur et les différents éléments de la tondeuse. Le châssis secondaire doit être aussi simple et léger que possible, mais doit pouvoir supporter le conducteur. Avantageusement et selon l'invention, le châssis secondaire est un châssis tubulaire comportant plusieurs tubes coudés -notamment quatre tubes coudés-, chaque tube ayant une extrémité associée à l'axe de l'une des roues de la tondeuse de façon à être portée directement par cette roue de la tondeuse, les tubes présentant des portions -notamment des portions d'extrémité- se rejoignant et reliées entre elles pour former une platine de réception du siège. Avantageusement et selon l'invention, les tubes sont prolongés à l'arrière de la platine pour former des poignées permettant de pousser la tondeuse, et s'étendant vers l'arrière sur une distance telle que la tondeuse peut être placée et reposer sur ces poignées en une position verticale de stockage. Plus généralement, le châssis secondaire peut être prolongé à l'arrière de façon à assurer la sustentation de la tondeuse en position verticale de stockage où elle occupe une moindre place au sol.

Avantageusement et selon l'invention, le carter de lame présente une ouverture d'éjection des résidus de tonte orientée vers l'arrière, entre les deux roues arrière.

Avantageusement, dans une tondeuse autoportée selon l'invention, l'essieu moteur monté sur la coque rigide du carter de lame, comprend deux roues motrices accouplées à cet essieu moteur, une de chaque côté à l'extérieur de la coque rigide du carter de lame. En outre, l'essieu moteur est entraîné par le moteur par l'intermédiaire d'un mécanisme d'embrayage différentiel réducteur.

L'ouverture d'éjection des résidus de tonte peut être décalée latéralement, sur le côté du mécanisme d'embrayage différentiel réducteur permettant l'entraînement de l'essieu arrière moteur. En pratique, le carter de lame d'une tondeuse autotractée connue traditionnelle avec son ouverture d'éjection arrière décalée latéralement peut être utilisé dans une tondeuse selon l'invention. Un bac de collecte des résidus de tonte peut être monté à l'arrière du carter de lame, comme dans le cas d'une tondeuse autotractée connue traditionnelle.

Le moteur de la tondeuse selon l'invention est de préférence un moteur thermique tel que celui équipant une tondeuse autotractée connue. Rien n'empêche cependant d'utiliser un moteur électrique si celui-ci s'avère compatible avec la puissance et le couple requis pour la tonte et la traction de la tondeuse autoportée selon l'invention.

Il a été aussi constaté qu'il est possible en pratique de concevoir des moyens de pilotage et des dispositifs de sécurité avantageux, simples et compatibles avec le choix de conception d'une tondeuse selon l'invention.

En particulier, les moyens de pilotage peuvent être formés par une simple modification apportée au mécanisme d'embrayage différentiel réducteur d'une tondeuse autotractée connue, et d'organes de manoeuvre permettant le pilotage de la tondeuse rapportés sur le châssis secondaire en une position adaptée pour pouvoir être manoeuvrés par un conducteur assis sur le siège.

Ainsi, dans une tondeuse selon l'invention, avantageusement, le mécanisme d'embrayage différentiel réducteur comprend un boîtier portant :
- un arbre d'entrée recevant le mouvement moteur de l'arbre moteur du moteur par l'intermédiaire d'une transmission,
- deux arbres de sortie coaxiaux formant l'essieu moteur, chaque arbre de sortie entraînant l'une des deux roues motrices,
- pour chaque arbre de sortie, des moyens d'embrayage de cet arbre de sortie, indépendamment de l'autre arbre de sortie, à un organe rotatif menant entraîné en rotation par l'arbre d'entrée.

En outre, avantageusement et selon l'invention, la tondeuse comprend, pour chaque arbre de sortie du mécanisme d'embrayage différentiel réducteur, des moyens de freinage de cet arbre de sortie indépendamment de l'autre arbre de sortie. Ces moyens de freinage peuvent être réalisés avantageusement sous la forme de freins portés par le boîtier du mécanisme d'embrayage différentiel réducteur, un à la sortie de chaque arbre de sortie du boîtier. Chaque frein est avantageusement du type comprenant un cylindre solidaire de l'arbre de sortie et un ou plusieurs patin(s) de freinage rapproché(s) radialement au contact de la périphérie du cylindre.

De plus, avantageusement et selon l'invention, la tondeuse comprend, pour chaque arbre de sortie du mécanisme d'embrayage différentiel réducteur, un levier de pilotage adapté pour, lorsqu'il est manoeuvré dans un sens -notamment vers l'avant-, activer les moyens d'embrayage de cet arbre de sortie, et lorsqu'il est manoeuvré dans un autre sens -notamment vers l'arrière-, activer les moyens de freinage de cet arbre de sortie. La conduite d'une tondeuse selon l'invention s'apparente ainsi à celle d'un cheval et est particulièrement simple et naturelle.

Avantageusement et selon l'invention, la tondeuse est aussi caractérisée en ce que les moyens de pilotage comportent deux leviers de pilotage adaptés pour commander indépendamment l'embrayage et/ou le freinage des deux roues motrices, et en ce qu'elle comporte au moins une roue directionnelle non motrice montée librement rotative autour d'un axe horizontal, sur un support qui est lui-même articulé libre en rotation autour d'un axe au moins sensiblement vertical par rapport au châssis secondaire. La(les) roue(s) directionnelle(s) non motrice(s) est(sont) donc portée(s) par le châssis secondaire et est (sont) donc folle(s).

Il est à noter que ces moyens de pilotage permettent non seulement de conférer une très grande maniabilité à la tondeuse, mais assurent un montage simple, résistant et fiable, réduit à une simple articulation des roues directionnelles folles. Ce montage est en particulier beaucoup plus simple et résistant qu'une direction à crémaillère qui n'est en pratique pas compatible avec la fabrication d'une tondeuse autoportée par transformation d'une cellule de tondeuse autotractée. De surcroît, avec de tels moyens d'entraînement de l'essieu moteur et de tels moyens de pilotage, il est aisément possible de réaliser la tondeuse aussi bien avec l'essieu moteur à l'arrière qu'avec l'essieu moteur à l'avant (les roues directionnelles folles étant à l'arrière) si cela est souhaité.

Avantageusement et selon l'invention, chaque levier de pilotage comprend une barre terminale fixée par un boulon au moins sensiblement horizontal à une barre principale de commande, de sorte que la barre terminale peut être placée soit en position active au moins sensiblement en prolongement de la barre principale de commande pour le pilotage, soit en position rabattue horizontalement de moindre encombrement en hauteur. De la sorte, les leviers de pilotage peuvent être rabattus, et la tondeuse ne présente qu'un faible encombrement en hauteur, facilitant son stockage et/ou son transport -notamment son insertion dans un coffre d'automobile à hayon-.

Par ailleurs, la tondeuse autoportée selon l'invention comporte un dispositif de sécurité permettant d'arrêter la lame de tonte -notamment d'arrêter le moteur ou d'interdire son démarrage- lorsqu'un conducteur n'est pas assis sur le siège. Avantageusement et selon l'invention, ce dispositif de sécurité comprend un frein de sécurité d'arrêt de lame et deux pédales de commande de ce frein de sécurité montées sur la tondeuse de façon à pouvoir être actionnées par les deux pieds d'un conducteur assis sur le siège et adaptées pour que le frein de sécurité soit actif si l'une au moins des deux pédales de commande n'est pas actionnée, et soit inactif si les deux pédales de commande sont actionnées.

Ainsi, le dispositif de sécurité permet d'arrêter le moteur dès que le conducteur bouge les pieds, avant même qu'il ne les pose au sol et se soulève du siège. La tondeuse selon l'invention est à cet égard plus sûre que les tondeuses autoportées traditionnelles qui ne s'arrêtent que lorsque le conducteur se soulève de son siège.

Avantageusement et selon l'invention, la tondeuse est aussi caractérisée en ce qu'elle comprend un câble de commande gainé s'étendant entre les pédales de commande et le frein de sécurité, en ce que le frein de sécurité est rappelé en position active par des moyens de rappel et est relié à une extrémité de câble de commande de façon à pouvoir être désactivé par une traction exercée sur ce câble de commande à l'encontre des moyens de rappel, en ce que l'autre extrémité du câble de commande est reliée à l'une des deux pédales de commande alors qu'une extrémité correspondante de la gaine est reliée à l'autre pédale de commande, et en ce que les deux pédales de commande sont montées sur la tondeuse de façon que seul l'actionnement de ces deux pédales de commande provoque une traction du câble de commande par rapport à la gaine apte à désactiver le frein de sécurité. Avantageusement, les deux pédales de commande sont montées librement pivotantes selon un même axe de rotation, et notamment sont articulées sur le châssis secondaire selon un même axe de rotation contenu dans un plan vertical longitudinal médian. Les pédales de commande peuvent être articulées sur une platine à l'avant du châssis secondaire, notamment entre les roues avant.

La tondeuse autoportée selon l'invention est légère, compacte et extrêmement maniable. Son poids et son encombrement sont semblables à ceux d'une tondeuse autotractée connue. Avantageusement et selon l'invention, une tondeuse à gazon autoportée selon l'invention présente un encombrement hors tout en longueur inférieur à 1,5 m -notamment de l'ordre de 1 m- ; en largeur inférieur à 0,7 m -notamment de l'ordre de 0,65 m- ; en hauteur inférieur à 1 m -notamment de l'ordre de 0,75 m-. Son poids est inférieur à 100 kg et est par exemple de l'ordre de 50 kg.

En outre, elle est de fabrication extrêmement simple et peu coûteuse, à partir d'une cellule de tondeuse autotractée connue traditionnelle. A ce titre, il est à noter que les investissements industriels pour la fabrication s'en trouvent réduits d'autant. Il est même possible d'envisager la transformation des tondeuses autotractées déjà fabriquées et/ou commercialisées en tondeuses autoportées selon l'invention par remplacement de la barre de manoeuvre et de pilotage manuel par le châssis secondaire, équipé du siège, des leviers de pilotage et des pédales de commande du frein de sécurité et remplacement du mécanisme d'embrayage différentiel réducteur simple par un mécanisme double à commandes indépendantes selon l'invention.

Ainsi, l'invention s'étend à un procédé de fabrication d'une tondeuse à gazon autoportée selon l'invention à partir d'une cellule de tondeuse à gazon autotractée connue que l'on modifie et complète. L'invention concerne donc un procédé de fabrication d'une tondeuse autoportée dans lequel :
- on part d'une cellule de tondeuse à gazon autotractée comprenant un carter de lame comprenant essentiellement une coque rigide portant un moteur adapté pour pouvoir entraîner au moins une lame de tonte rotative à axe de rotation au moins sensiblement vertical et au moins un essieu moteur auquel au moins une roue motrice est accouplée, et des moyens de pilotage comprenant au moins une commande par câble,
- on forme, avec un châssis secondaire, portant un siège, et le carter de lame, une structure rigide sur laquelle l'essieu moteur est monté et adaptée pour pouvoir être supportée par des roues montées sur cette structure rigide,
caractérisé en ce que :
- on monte le châssis secondaire directement sur l'essieu moteur,
- on fixe une partie du carter de lame opposée à l'essieu moteur suspendue à une partie du châssis secondaire qui s'étend au-delà du carter de lame à l'opposé de l'essieu moteur,
- on monte au moins une roue directionnelle directement sur ladite partie du châssis secondaire de sorte que le poids du châssis secondaire, du siège et du conducteur est directement réparti sur les roues sans générer de contraintes substantielles sur le carter de lame.

Avantageusement et selon l'invention :
- on articule le châssis secondaire à l'essieu moteur autour d'un axe transversal horizontal,
- à l'opposé de l'essieu moteur, on associe rigidement le carter de lame et le châssis secondaire par des moyens d'association adaptés pour autoriser leur dissociation et le pivotement du châssis secondaire par rapport au carter de lame autour dudit axe transversal horizontal, en vue de dégager l'accès au moteur porté par le carter de lame.

Avantageusement et selon l'invention, on articule le châssis secondaire à l'extérieur de chaque roue de l'essieu moteur de la cellule selon un axe confondu avec l'axe de rotation de la roue. Avantageusement et selon l'invention, l'essieu moteur étant un essieu arrière moteur, on articule le châssis secondaire à l'essieu arrière moteur autour d'un axe transversal horizontal arrière, on fixe la partie avant du carter de lame suspendue au châssis secondaire, et on monte au moins une roue avant -notamment chaque roue avant- sur le châssis secondaire et non sur le carter de lame.

Avantageusement et selon l'invention, le procédé est caractérisé en ce qu'on monte sur l'essieu moteur, auquel deux roues motrices sont accouplées, un mécanisme d'embrayage différentiel comprenant un boîtier portant :
- un arbre d'entrée recevant le mouvement moteur de l'arbre moteur du moteur par l'intermédiaire d'une transmission,
- deux arbres de sortie coaxiaux formant l'essieu moteur, chaque arbre de sortie entraînant l'une des deux roues motrices,
- pour chaque arbre de sortie, des moyens d'embrayage de cet arbre de sortie, indépendamment de l'autre arbre de sortie, à un organe rotatif menant entraîné en rotation par l'arbre d'entrée.

Avantageusement et selon l'invention, le procédé est caractérisé en ce qu'on monte sur chaque arbre de sortie du mécanisme d'embrayage différentiel réducteur, des moyens de freinage de cet arbre de sortie indépendamment de l'autre arbre de sortie.

Avantageusement et selon l'invention, le procédé est aussi caractérisé en ce qu'on monte sur le châssis secondaire deux leviers de pilotage adaptés pour commander indépendamment l'embrayage et/ou le freinage des deux roues motrices, et en ce qu'on monte au moins une roue directionnelle non motrice librement rotative autour d'un axe horizontal sur un support articulé qui est lui-même libre en rotation autour d'un axe au moins sensiblement vertical par rapport au châssis secondaire.

Avantageusement et selon l'invention, le procédé est caractérisé en ce qu'on utilise une cellule de tondeuse autotractée comprenant un frein de sécurité d'arrêt de lame, et en ce que l'on monte sur le châssis secondaire et on relie au frein de sécurité deux pédales de commande de ce frein de sécurité adaptées pour pouvoir être actionnées par les deux pieds d'un conducteur assis sur le siège de telle sorte que ce frein de sécurité est actif si l'une au moins des deux pédales de commande n'est pas actionnée, et inactif si les deux pédales de commande sont actionnées.

Le procédé de fabrication selon l'invention peut être mis en oeuvre en usine pour la fabrication de tondeuses autoportées selon l'invention à partir de cellules de tondeuses autotractées traditionnelles. Il peut aussi être mis en oeuvre dans les ateliers des distributeurs et/ou réparateurs de tondeuses pour transformer des tondeuses autotractées déjà fabriquées et/ou vendues en tondeuses autoportées selon l'invention et il s'agit alors d'un procédé de transformation.

L'invention s'étend aussi à un kit de mise en oeuvre d'un tel procédé selon l'invention. L'invention concerne donc aussi un kit de mise en oeuvre d'un procédé de fabrication d'une tondeuse à gazon autoportée à partir d'une cellule de tondeuse à gazon autotractée connue, comprenant un châssis secondaire, portant un siège, ce châssis secondaire étant adapté pour pouvoir former, avec un carter de lame de la cellule de tondeuse à gazon autotractée, comprenant essentiellement une coque rigide portant un moteur et un essieu moteur, une structure rigide sur laquelle l'essieu moteur est monté et qui est adaptée pour pouvoir être supportée par des roues,
caractérisé en ce que :
- il comprend des moyens de montage direct du châssis secondaire sur l'essieu moteur,
- des moyens de fixation suspendus au châssis secondaire d'une partie du carter de lame opposée à l'essieu moteur,
- des moyens de montage direct d'au moins une roue directionnelle directement sur une partie du châssis secondaire adaptée pour s'étendre au-delà du carter de lame à l'opposé de l'essieu moteur, de sorte que le poids du châssis secondaire du siège et du conducteur peut être directement réparti sur les roues sans générer de contraintes substantielles supplémentaires sur le carter de lame. Autrement dit, les contraintes subies par le carter de lame sont sensiblement les mêmes que dans le cas d'une tondeuse autotractée formée avec cette cellule.

Avantageusement et selon l'invention, le kit comprend en outre un mécanisme d'embrayage différentiel comprenant un boîtier portant :
- un arbre d'entrée recevant le mouvement moteur de l'arbre moteur du moteur par l'intermédiaire d'une transmission,
- deux arbres de sortie coaxiaux formant l'essieu moteur, chaque arbre de sortie entraînant l'une des deux roues motrices, accouplées à l'essieu moteur,
- pour chaque arbre de sortie, des moyens d'embrayage de cet arbre de sortie, indépendamment de l'autre arbre de sortie, à un organe rotatif menant entraîné en rotation par l'arbre d'entrée.

Avantageusement et selon l'invention, le kit comprend, montés sur chaque arbre de sortie du mécanisme d'embrayage différentiel réducteur, des moyens de freinage de cet arbre de sortie indépendamment de l'autre arbre de sortie.

Avantageusement et selon l'invention, le kit est aussi caractérisé en ce qu'il comprend deux leviers de pilotage montés sur le châssis secondaire et adaptés pour commander indépendamment l'embrayage et/ou le freinage des deux roues motrices, et en ce qu'il comprend au moins un support d'au moins une roue directionnelle non motrice librement rotative autour d'un axe horizontal, ce support étant lui-même articulé libre en rotation autour d'un axe au moins sensiblement vertical par rapport au châssis secondaire.

Avantageusement et selon l'invention, le kit est aussi caractérisé en ce qu'il comprend deux pédales de commande adaptées pour pouvoir être reliées à un frein de sécurité d'arrêt de lame et montées sur le châssis secondaire pour pouvoir être actionnées par les deux pieds d'un conducteur assis sur le siège de telle sorte que ce frein de sécurité est actif si l'une au moins des deux pédales de commande n'est pas actionnée, et inactif si les deux pédales de commande sont actionnées.

Le kit selon l'invention est donc un kit de transformation d'une tondeuse autotractée connue en tondeuse autoportée selon l'invention. Il est de préférence destiné aux professionnels distributeurs et/ou réparateurs de tondeuses à gazon mais pourrait tout aussi bien être proposé directement aux particuliers souhaitant transformer leur tondeuse après l'achat.

L'invention concerne aussi une tondeuse, un procédé de fabrication et un kit caractérisés en combinaison par tout ou partie des caractéristiques mentionnées ci-dessus ou ci-après.

D'autres buts, avantages et caractéristiques de l'invention apparaîtront à la lecture de la description suivante d'un de ses modes de réalisation donnée à titre d'exemple non limitatif, et qui se réfère aux figures annexées dans lesquelles :
- la figure 1 est une vue schématique en perspective d'une tondeuse selon un premier mode de réalisation de l'invention,
- la figure 2 est une vue schématique de dessous de la tondeuse de la figure 1,
- la figure 3 est un schéma illustrant l'essieu moteur et le fonctionnement des moyens de pilotage d'une tondeuse selon l'invention,
- la figure 4 est un schéma de principe de la cinématique du mécanisme d'embrayage différentiel réducteur d'une tondeuse selon l'invention,
- la figure 5 est un schéma illustrant l'arbre moteur et le fonctionnement du dispositif de sécurité d'une tondeuse selon l'invention, en position active de freinage du frein de sécurité, les pédales de commande n'étant pas actionnées,
- les figures 6a et 6b sont des schémas illustrant deux autres positions du dispositif de sécurité dans lesquelles une seule pédale de commande est actionnée, le frein de sécurité étant actif, la figure 6c étant un schéma illustrant le dispositif de sécurité alors que les deux pédales de commande sont actionnées, le frein de sécurité étant inactif,
- la figure 7 est une vue schématique de profil montrant le châssis secondaire de la tondeuse selon la figure 1 en position relevée d'accès au moteur,
- la figure 8 est une vue schématique en perspective latérale montrant une tondeuse selon un deuxième mode de réalisation de l'invention.

La tondeuse à gazon autoportée selon l'invention représentée sur les figures comprend une cellule de base de tondeuse autotractée comportant un carter de lame 1 portant un moteur 2 thermique entraînant au moins une lame de tonte 3 rotative accouplée directement sur l'arbre moteur 4 du moteur 2.

Le moteur 2 est de préférence un moteur thermique d'une puissance de l'ordre de 1000 W à 5500W, par exemple 3CV (2200W) ou 5CV (3675W). Dans ce cas, l'arbre moteur 4 est formé d'une prolongation du vilebrequin. On peut aussi utiliser un moteur électrique de puissance comparable.

Le carter de lame 1 est essentiellement formé d'une coque en une seule pièce en matière synthétique moulée ou métallique emboutie rigide formant un châssis portant le moteur 2 en position au moins sensiblement centrale, et adaptée pour circonscrire l'espace balayé par la lame de tonte 3 rotative. Le moteur 2 est placé au-dessus de ce carter de lame 1 et son arbre moteur 4 s'étend au moins sensiblement verticalement vers le bas par une ouverture ménagée à travers une paroi principale au moins sensiblement horizontale 6 du carter de lame 1 pour être accouplée à la lame 3 qui est placée sous cette paroi principale 6. Le moteur 2 présente un encombrement en largeur et en longueur en général moins important que celui du carter de lame 1 qui est défini par le diamètre de la lame rotative 3. Le carter de lame 1 porte également un essieu arrière moteur 7 auquel sont accouplées des roues arrière motrices 8, une de chaque côté. Cet essieu arrière 7 est monté sur la coque rigide du carter de lame 1 par l'intermédiaire d'un dispositif de réglage en hauteur permettant de régler la hauteur de tonte de la tondeuse. Ce dispositif de réglage en hauteur peut être réalisé par exemple tel que décrit par le brevet FR-2 718 389.

Le carter de lame 1 présente également une partie avant 9 destinée à recevoir, de chaque côté, des roues avant dans le cas d'une tondeuse à gazon autotractée connue. Dans la tondeuse autoportée selon l'invention, cette partie avant 9 n'est pas utilisée pour monter les roues avant.

A l'arrière de l'essieu arrière 7, le carter de lame 1 présente une ouverture 11 d'éjection des résidus de tonte. Cette ouverture 11 est décalée latéralement par rapport au plan médian de l'essieu arrière 7, selon le sens de rotation de la lame 3, pour favoriser l'éjection.

La tondeuse selon l'invention comprend en outre un châssis secondaire 12 auquel le carter de lame 1 est associé rigidement. Ce châssis secondaire 12 porte lui-même un siège 13 de réception d'un conducteur. Il porte également des organes 29, 59 de manoeuvre pour le pilotage de la tondeuse, comme cela sera expliqué plus en détail ci-après.

Le châssis secondaire 12 s'étend au-dessus et à l'arrière du moteur 2, de façon que le siège 13 soit disposé au-dessus et à l'arrière du moteur 2. Il s'étend également vers l'avant et vers le bas, au-delà du carter de lame 1 sur une distance suffisante pour permettre d'une part une position ergonomique appropriée du conducteur assis sur le siège 13, les pieds du conducteur reposant sur l'avant du châssis secondaire 12, d'autre part, le montage de deux roues avant 10, l'une de chaque côté, sur ce châssis secondaire 12, et également la fixation de la partie avant 9 du carter de lame 1 suspendue au châssis secondaire 12.

Le châssis secondaire 12 est un châssis tubulaire qui comprend quatre tubes coudés 14, 15. Chaque tube coudé 14, 15 a une extrémité libre 16, 17 qui s'étend au voisinage de l'une des roues 8, 10, et est reliée à l'axe de rotation de cette roue 8, 10, directement ou indirectement, mais sans l'intermédiaire du carter de lame 1, de sorte que le poids du châssis secondaire 12, du siège 13 et du conducteur, et du carter de lame 1 portant le moteur 2 est directement réparti sur les quatre roues 8, 10. Ainsi, chaque roue arrière 8 porte l'extrémité libre 16 d'un tube coudé 14, dit tube coudé arrière 14. Cette extrémité libre 16 est articulée à l'extérieur de la roue arrière 8 selon un axe 18 confondu avec l'axe de rotation horizontal de cette roue arrière 8. Pour ce faire, un arbre 52 est fixé solidaire en rotation de la roue arrière 8, dans le prolongement de son axe de rotation horizontal latéralement vers l'extérieur, et l'extrémité libre 16 est articulée à cet arbre 52. En variante non représentée, l'extrémité libre 16 du tube coudé 14 peut tout aussi bien être articulée sur un arbre de l'essieu arrière 7 du côté intérieur par rapport à la roue arrière 8.

Chaque roue avant 10 est articulée libre en rotation autour d'un arbre horizontal 19 sur un flasque de support 20 qui est lui-même articulé libre en rotation autour d'un axe vertical 21 par rapport à une extrémité libre 17 d'un tube coudé 15, dit tube coudé avant 15. Les roues avant 10 sont donc des roues directionnelles (en ce sens que leur orientation correspond aux mouvements giratoires de la tondeuse), et sont montées à l'avant du châssis secondaire 12, et non sur le carter de lame 1.

Les deux tubes coudés arrière 14 sont symétriques l'un de l'autre par rapport à un plan vertical médian de la tondeuse. De même, les tubes coudés avant 15 sont symétriques l'un de l'autre par rapport à un plan vertical médian de la tondeuse et accolés l'un à l'autre.

Les tubes coudés 14, 15 s'étendent à partir de leurs extrémités libres 16, 17 associées aux roues 8, 10 vers le haut puis vers l'arrière au-dessus du moteur 2, de sorte que leurs autres portions d'extrémités libres 22, 23 se rejoignent et sont reliées parallèlement entre elles pour former une platine 53 de réception du siège 13. Ainsi, les quatre extrémités libres 22, 23 des tubes coudés 14, 15 s'étendent sur une certaine longueur parallèlement les unes aux autres et à la direction longitudinale vers l'arrière, et dans un même plan horizontal formant la platine 53. Elles peuvent être associées les unes aux autres simplement grâce à des boulons qui les traversent.

Les extrémités avant des tubes coudés avant 15 s'écartent l'une de l'autre latéralement, de sorte que les extrémités libres 17 des tubes coudés avant 15 portant les roues avant 10 sont écartées latéralement l'une de l'autre d'une distance suffisante pour assurer une bonne stabilité latérale de la tondeuse. Cette distance correspond au moins sensiblement à la largeur du carter de lame 1, comme dans le cas d'une tondeuse autotractée connue traditionnelle, ou peut être supérieure à la largeur du carter 1, et être par exemple sensiblement la même que celle séparant les roues arrière 8. En variante non représentée non préférentielle, la tondeuse selon l'invention peut ne comporter qu'une seule roue avant directionnelle folle.

Le carter de lame 1 est fixé suspendu par sa partie avant 9 au châssis secondaire 12 grâce à un étrier 26 de fixation. Cet étrier 26 est fixé aux tubes coudés avant 15 devant le moteur 2. Il est en outre fixé de chaque côté de la partie avant 9 du carter de lame 1, par exemple grâce à de simples boulons 27 de serrage. En variante non représentée, l'étrier 26 est articulé à la partie avant 9 du carter de lame 1, directement ou par l'intermédiaire d'un mécanisme approprié, de façon à autoriser des mouvements relatifs longitudinalement et/ou verticalement du carter de lame 1 et du châssis secondaire 12 lors du réglage de la hauteur de coupe par l'intermédiaire de l'essieu arrière comme décrit par FR-2.718.389.

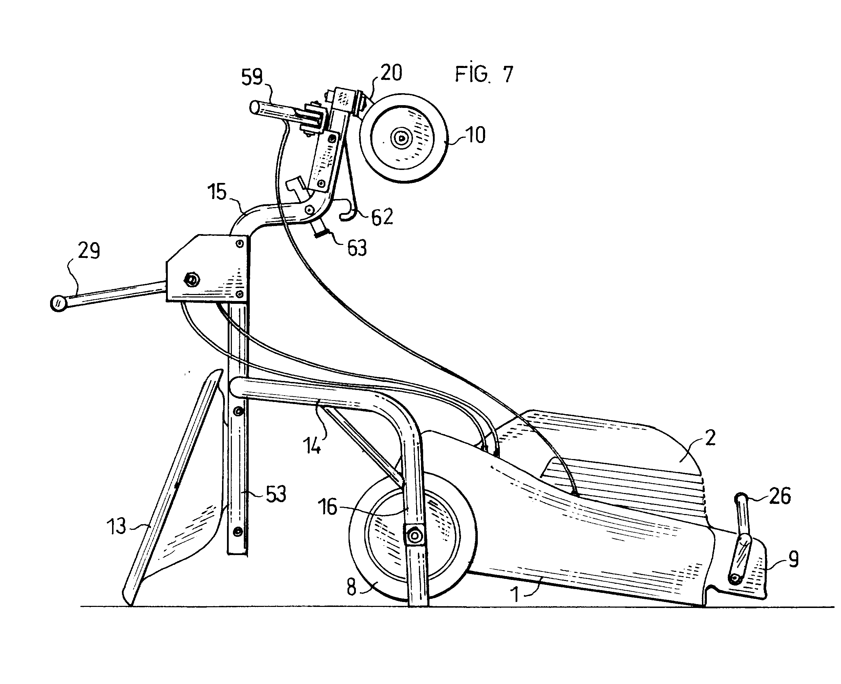

L'étrier 26 est lui-même suspendu aux tubes avant 15 du châssis secondaire 12 par un crochet de suspension 62 solidaire du châssis secondaire. Un loquet de verrouillage 63 rotatif permet de verrouiller l'étrier 26 en place dans le crochet 62. L'étrier 26 peut être dissocié du châssis secondaire 26 par pivotement du loquet 63. Le châssis secondaire 12 peut alors être relevé, en pivotant autour de son axe 18 arrière d'articulation à l'essieu arrière 7, jusqu'à ce que le siège 13 vienne reposer sur le sol comme représenté figure 7. Dans cette position, le moteur 2 est entièrement dégagé, ce qui facilite les opérations de maintenance ou de préparation en vue de l'utilisation (vérification des niveaux, remplissage des réservoirs...).

Il est à noter également que même en position abaissée normale d'utilisation, le châssis secondaire 12 laisse libre l'accès aux différentes parties du moteur 2 auxquelles l'utilisateur doit avoir accès pour faire fonctionner la tondeuse, à savoir notamment, dans le cas d'un moteur thermique, l'orifice de remplissage du réservoir de carburant, le bouchon et la jauge de vérification du niveau d'huile moteur, le dispositif de démarrage du moteur (en général à poignée et à enrouleur de corde), ... De plus, le moteur thermique 2 étant en général du type refroidi par air, il est à noter que le châssis secondaire 12 laisse libre le passage de l'air autour du moteur 2, de façon traditionnelle, comme dans le cas d'une tondeuse autotractée connue. Le châssis secondaire 12 ne gêne pas non plus les opérations de maintenance (vidange d'huile, changement de filtre à air, changement de bougies, changement de lame de tonte 3...), l'ensemble du moteur 2 et la lame 3 étant librement accessibles, notamment en position relevée du châssis secondaire 12, comme dans le cas d'une tondeuse autotractée connue traditionnelle. Ainsi, les opérations de maintenance d'une tondeuse autoportée selon l'invention sont aussi faciles et simples que celles d'une tondeuse autotractée connue traditionnelle.

Par ailleurs, les moyens de pilotage d'une tondeuse à gazon autoportée selon l'invention doivent incorporer des moyens permettant de piloter la tondeuse, le conducteur étant assis sur le siège 13. Avantageusement et selon l'invention, les moyens de direction sont formés par des moyens d'embrayage et/ou de freinage indépendants de chacune des deux roues arrière motrices 8.

Dans ce but, l'essieu arrière moteur 7 est entraîné par le moteur 2 par l'intermédiaire d'un mécanisme d'embrayage différentiel réducteur 28, et ce mécanisme est modifié par rapport à celui traditionnellement utilisé sur les tondeuses autotractées connues, de façon à permettre l'embrayage et/ou le freinage indépendamment de chacune des roues arrière 8 sous la commande de deux leviers de pilotage 29, chacun de ces leviers de pilotage 29 commandant l'embrayage et/ou le freinage de l'une des deux roues arrière motrices.

Le mécanisme d'embrayage différentiel réducteur 28 comprend un boîtier 30 portant :
- un arbre d'entrée 31 recevant le mouvement moteur de l'arbre moteur 4 du moteur 2 par l'intermédiaire d'une transmission qui peut être formée d'une courroie 32 reliant une poulie 33 solidaire de l'arbre moteur 4 et une poulie 34 solidaire de cet arbre d'entrée 31, cette transmission s'étendant sous la paroi principale 6 du carter 1,
- deux arbres de sortie 35 coaxiaux, orthogonaux à l'arbre d'entrée 31, ces deux arbres de sortie 35 formant l'essieu arrière moteur 7 et entraînant, à leur extrémité libre, chacun une roue arrière motrice 8.

Le mécanisme d'embrayage différentiel réducteur 28 comprend en outre, pour chaque arbre de sortie 35, des moyens d'embrayage de cet arbre de sortie 35, indépendamment de l'autre arbre de sortie 35, à un organe rotatif menant 36 entraîné en rotation par l'arbre d'entrée 31.

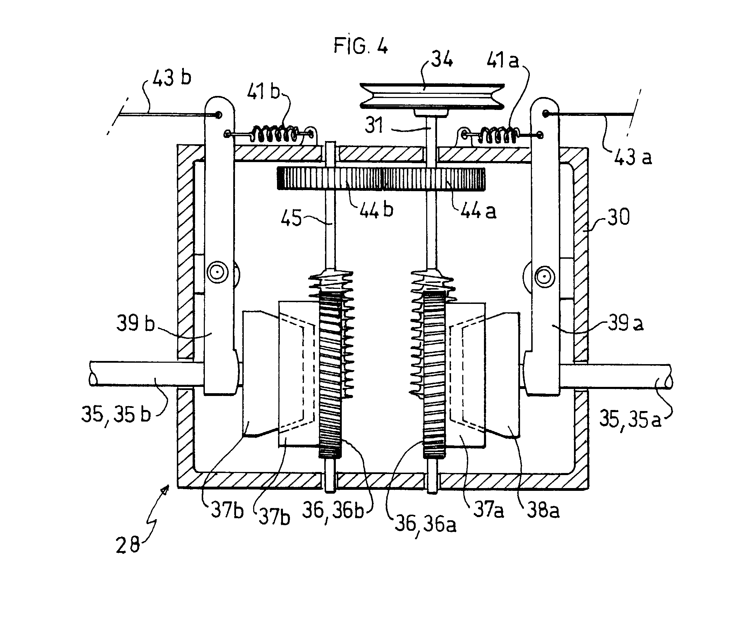

Comme on le voit figure 4, l'arbre d'entrée 31 est prolongé dans le boîtier 30 par une vis sans fin qui est engrenée sur un premier pignon 36a monté libre en rotation par rapport au boîtier et en butée axiale au moins d'un côté (côté gauche sur la figure 4), par exemple par l'intermédiaire d'un roulement formant butée axiale. Ce pignon 36a entraîne une cloche d'embrayage 37a à portée interne tronconique apte à coopérer avec un coulisseau tronconique 38a d'embrayage qui est solidaire en rotation de l'arbre de sortie 35a correspondant, mais peut coulisser parallèlement à cet arbre de sortie 35a pour engager la cloche d'embrayage 37a correspondante. Une fourchette 39a d'embrayage est articulée par rapport au boîtier 30 et est adaptée pour pouvoir repousser le coulisseau d'embrayage tronconique 38a dans la cloche d'embrayage 37a, ce par quoi l'arbre de sortie 35a est solidaire en rotation du pignon rotatif menant 36a entraîné en permanence en rotation par l'arbre d'entrée 31. Une rondelle de synchronisation peut être prévue entre la fourchette 39a et le coulisseau d'embrayage 38a. La fourchette 39a débouche à l'extérieur du boîtier 30 pour pouvoir être commandée par un levier de commande 42a articulé sur le boîtier 30 et commandé par le conducteur grâce au levier de pilotage 29a correspondant auquel il est relié par un câble gainé 43a. Le levier de commande 42a et la fourchette d'embrayage 39a sont rappelés en position débrayée par un ressort de rappel 41a. Sur la figure 4, représentant uniquement de façon schématique un exemple de principe de la cinématique, le levier de commande 42a n'est pas représenté (le câble 43a et le ressort 41a sont représentés directement associés à la fourchette 39a).

L'arbre d'entrée 31 porte et entraîne également un pignon 44a qui engrène avec un pignon 44b solidaire en rotation d'une deuxième vis sans fin 45. Cette vis sans fin 45 engrène également avec un deuxième pignon rotatif menant 36b librement rotatif par rapport au boîtier 30 et en butée axiale du côté opposé au premier pignon 36a, par exemple par l'intermédiaire d'un roulement formant butée axiale. Les deux pignons menants 36a, 36b sont coaxiaux et entraînés en rotation dans le même sens, comme les arbres de sortie 35a, 35b. Le deuxième arbre de sortie 35b est relié par un dispositif d'embrayage identique à celui décrit en relation avec le premier arbre de sortie 35a, au pignon rotatif menant 36b. Ce dispositif d'embrayage comprend donc une cloche d'embrayage 37b tronconique, un coulisseau d'embrayage 38b tronconique, une fourchette d'embrayage 39b, une rondelle de synchronisation éventuelle, un ressort de rappel 41b et un levier de commande 42b (non représenté figure 4) relié au levier de pilotage 29b correspondant par l'intermédiaire d'un câble gainé 43b.

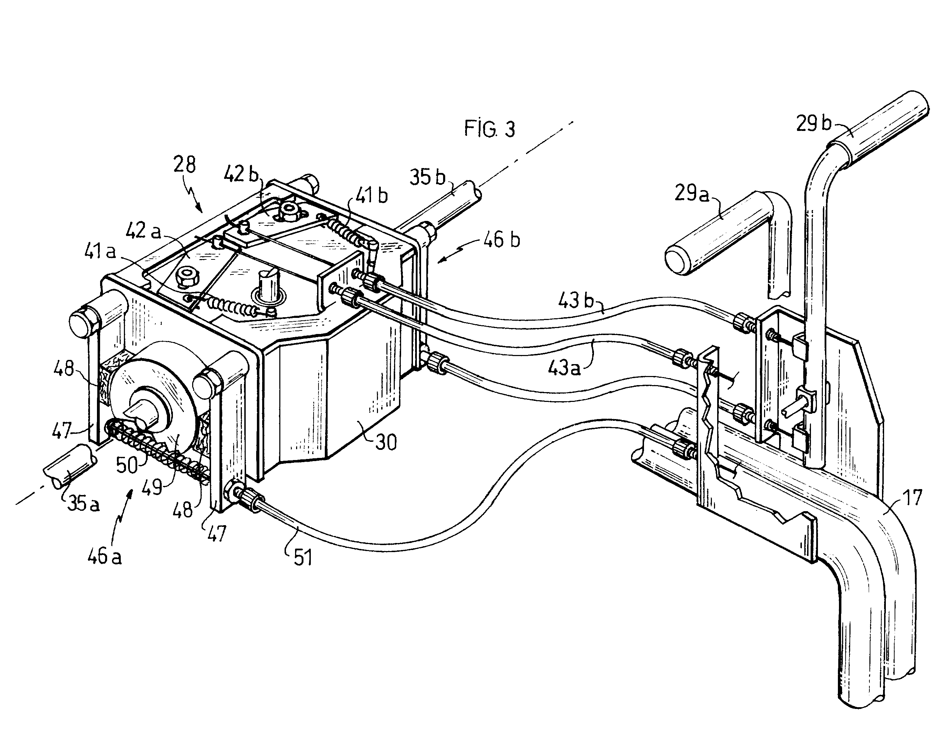

Le mécanisme d'embrayage différentiel réducteur 28 comprend également des moyens de freinage, indépendamment l'un de l'autre, des deux arbres de sortie 35a, 35b (non représentés figure 4 mais représentés figure 3). Ces moyens de freinage peuvent être formés d'un frein 46a porté par le boîtier 30 à la sortie du premier arbre de sortie 35a et d'un frein 46b porté par le boîtier 30 à la sortie du deuxième arbre de sortie 35b. Chacun de ces freins 46a, 46b est formé de deux leviers 47 articulés au boîtier selon des axes parallèles aux arbres de sortie 35a, 35b, portant chacun une garniture de freinage 48 apte à pouvoir être serrée contre un cylindre 49 solidaire en rotation de l'arbre de sortie 35a, 35b correspondant, lorsque les deux leviers 47 sont rapprochés l'un de l'autre à l'encontre d'un ressort de compression 50 qui les éloigne l'un de l'autre. Le rapprochement des leviers 47 est obtenu par un câble de commande 51 gainé dont une extrémité est reliée à un des deux leviers 47, tandis que l'extrémité de la gaine correspondante est reliée à l'autre levier 47.

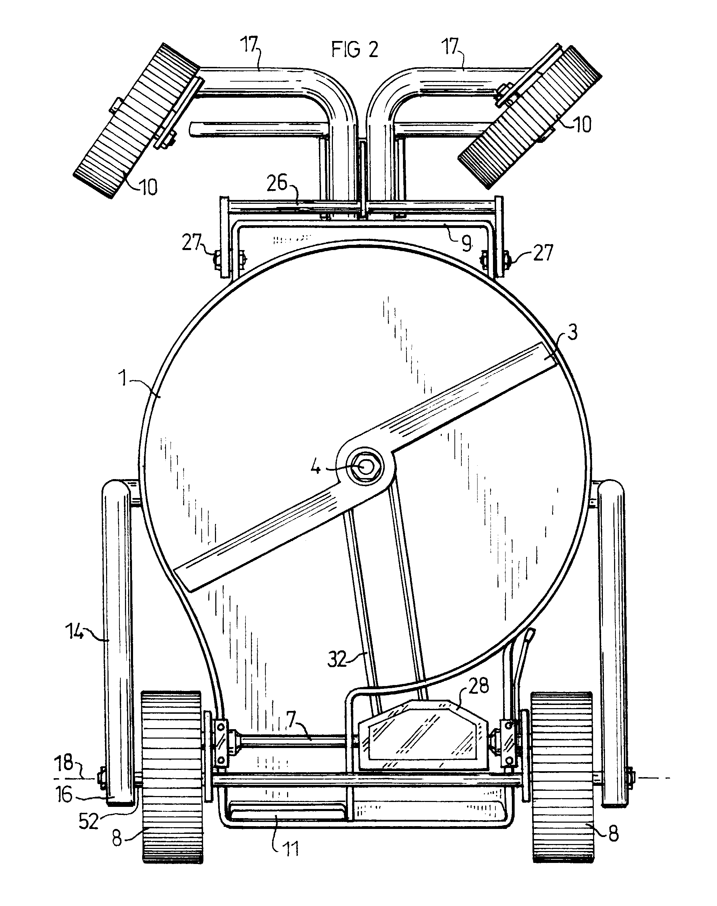

Le mécanisme d'embrayage différentiel réducteur 28 d'une tondeuse selon l'invention est particulièrement simple et compact en regard des fonctions qu'il procure. En particulier, il est suffisamment peu encombrant en largeur pour pouvoir être décalé latéralement d'un côté sur l'essieu arrière 7 (figure 2) pour pouvoir laisser libre une ouverture 11 arrière d'éjection des résidus de tonte de largeur suffisante, comme dans le cas d'une tondeuse autotractée connue. De la sorte, on peut utiliser pour une tondeuse autoportée selon l'invention, un carter de lame 1 de tondeuse autotractée connue, ce qui représente une grande économie à la fabrication.

Comme on le voit figure 3, la tondeuse comprend un levier de pilotage 29a, 29b pour chaque arbre de sortie 35a, 35b, et ce levier de pilotage 29a, 29b est adapté pour, lorsqu'il est manoeuvré dans un premier sens (vers l'avant), activer l'embrayage de l'arbre de sortie 35a, 35b correspondant, et lorsqu'il est manoeuvré dans un deuxième sens (vers l'arrière) opposé au premier, activer le frein 46a, 46b de l'arbre de sortie 35a, 35b correspondant. De la sorte, il est possible soit d'embrayer les deux arbres de sortie 35a, 35b, les deux roues arrière étant motrices simultanément, soit de n'embrayer qu'une seule des deux roues arrière 8, l'autre étant en roue libre ni embrayée ni freinée, soit de freiner l'une des deux roues arrière 8, l'autre roue arrière 8 étant en roue libre ou embrayée, soit de freiner les deux roues arrière 8.

Les deux roues avant 10 directionnelles folles étant non motrices, libres en rotation autour de leurs axes horizontaux 19, et montées sur les flasques de support 20 libres en rotation autour d'axes verticaux 21, elles autorisent les mouvements giratoires de la tondeuse induits par la manoeuvre des leviers de pilotage 29a, 29b. On obtient ainsi une tondeuse autoportée extrêmement maniable, à laquelle il est possible de donner des rayons de braquage très faibles.

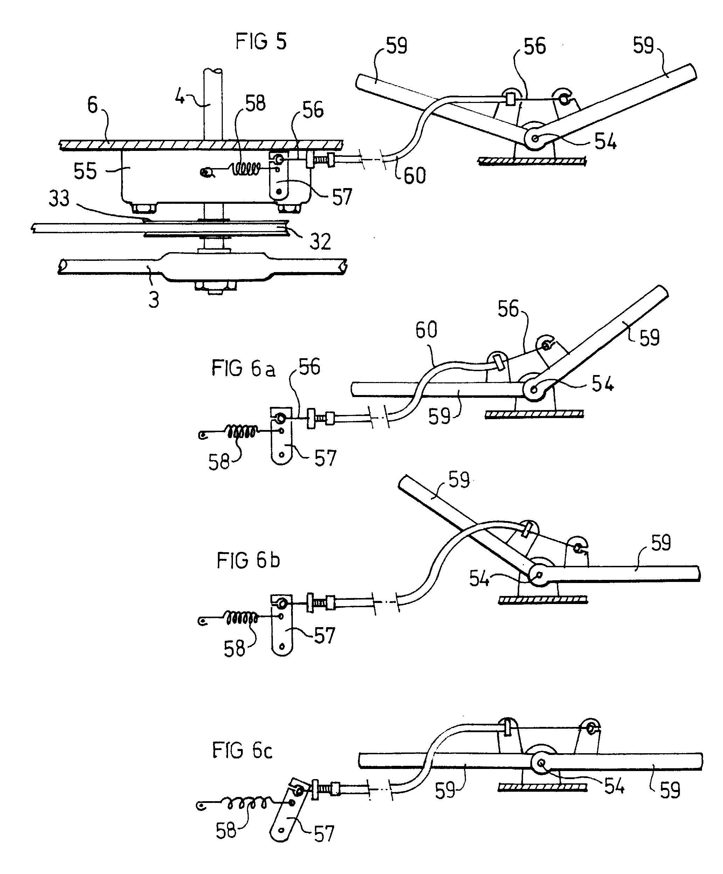

Par ailleurs, la tondeuse comprend un frein de sécurité 55 d'arrêt de lame qui, dans l'exemple représenté figure 5, peut être un embrayage-frein monté entre l'arbre moteur 4 du moteur 2 et l'arbre de la lame de tonte 3 sous la paroi principale 6 du carter 1, de façon connue en soi. En variante, un tel frein de sécurité peut être monté sur le moteur 2 lui-même pour freiner l'arbre moteur 4 directement, la lame 3 étant alors directement accouplée à l'arbre moteur 4. En effet, ces freins de sécurité sont imposés par les normes, et équipent déjà les cellules de tondeuses autotractées connues. Ils permettent d'arrêter la lame de tonte 3 dès que l'utilisateur relâche la commande d'embrayage d'une tondeuse autotractée connue traditionnelle. Ils comprennent un frein qui est rappelé en permanence en position de freinage de la lame 3 et/ou de l'arbre moteur 4 et commandé en position inactive libérant la lame 3 grâce à un câble de commande 56. Sur la figure 5, on a schématisé ce frein de sécurité 55 sous la forme d'un simple boîtier avec un levier de commande 57 et un ressort de rappel 58. Un tel frein de sécurité 55 peut être du type frein à tambour ou à coincement ou autre.

Selon l'invention le frein de sécurité 55 est relié à deux pédales de commande 59 montées de façon à pouvoir être actionnées par les deux pieds du conducteur assis sur le siège 13, et adaptées pour que le frein de sécurité 55 soit actif si l'une des deux pédales de commande 59 n'est pas actionnée et soit inactif si les deux pédales de commande 59 sont actionnées. Le câble de commande 56 coulisse dans une gaine 60 dont une extrémité est solidaire du boîtier du frein de sécurité 56, tandis que l'autre extrémité de la gaine 60 est solidaire de l'une des deux pédales 59, l'extrémité libre correspondante du câble 56 étant solidaire de l'autre pédale 59. Les deux pédales 59 sont articulées sur le châssis secondaire 12 autour d'un axe 54 commun horizontal longitudinal. En position initiale représentée figure 5, elles forment un certain angle entre elles par rapport à l'horizontale, et le frein de sécurité 55 est actif sous l'effet du ressort 58, l'arbre moteur 4 étant bloqué. Si on appuie sur l'une des pédales de commande 59 comme représenté figure 6a ou 6b, l'autre pédale pivotera simultanément autour de l'axe 54 de sorte que le frein de sécurité 55 ne sera pas désactivé. Le même résultat est obtenu si l'on appuie sur l'une ou l'autre seulement des deux pédales 59. Par contre, lorsque le conducteur actionne les deux pédales de commande 59 simultanément avec ses pieds, dans la position représentée figure 6c, l'extrémité 56 du câble est éloignée de l'extrémité 60 de la gaine, ce qui a pour effet de déplacer le levier de commande 57 du frein de sécurité 55, et donc de désactiver ce frein de sécurité 55, l'arbre moteur 4 étant libéré, la tondeuse pouvant être démarrée. Ainsi, les deux pédales de commande 59 sont montées de façon que seul l'actionnement des deux pédales de commande 59 simultanément provoque une traction du câble 56 par rapport à la gaine 60 apte à désactiver le frein de sécurité 55.

Dans ce mode de réalisation, pour démarrer la tondeuse, le conducteur doit préalablement s'asseoir sur le siège 13 et actionner les deux pédales de commande 59 avec ses pieds. Il lui suffit alors d'actionner manuellement la poignée de démarrage pour exercer une traction sur la corde enroulée du démarreur du moteur 2. Pour faciliter cette manoeuvre, on prévoit avantageusement un renvoi de la corde permettant de placer la poignée en une position ergonomique facilement accessible. En variante, un système de démarrage électrique (du type de ceux utilisés sur des tondeuses autrotractées connues) peut être prévu.

Pour fabriquer une tondeuse à gazon autoportée selon l'invention, on part donc d'une cellule de tondeuse à gazon autotractée connue que l'on modifie, c'est-à-dire à laquelle on associe le châssis secondaire 12 portant le siège 13, et on relie le câble de commande 56 du frein de sécurité 55 aux pédales 59 de commande, on monte sur l'essieu moteur 7 un mécanisme d'embrayage différentiel réducteur 28 tel que décrit ci-dessus permettant l'embrayage et le freinage indépendamment des deux roues arrière 8, on monte sur le châssis secondaire 12 deux leviers de pilotage 29a, 29b que l'on relie par les câbles 43a, 43b au mécanisme d'embrayage différentiel réducteur 28, et on monte les roues avant 10 non motrices articulées par leur support 20 à l'avant du châssis secondaire 12. On articule le châssis secondaire 12 à l'essieu arrière 7 par les arbres 52 et on suspend la partie avant 9 du carter 1 par l'étrier 26 au crochet 62, sous les tubes avant 15 du châssis secondaire 12.

Le kit de mise en oeuvre pour la fabrication d'une tondeuse à gazon autoportée selon l'invention à partir d'une cellule de tondeuse à gazon autotractée connue comprend le châssis secondaire 12, le siège 13 porté par ce châssis 12, ainsi que le mécanisme d'embrayage différentiel réducteur 28, les deux leviers de pilotage 29 et les pédales de commande 59, l'étrier 26 de fixation à l'avant du carter de lame 1 et les arbres 52 d'articulation aux roues arrière 8. Il peut comprendre aussi tout ou partie des câbles de liaison 43a, 43b, 51, 56 et une courroie 32 pour relier le mécanisme d'embrayage différentiel 28 à l'arbre moteur 4.

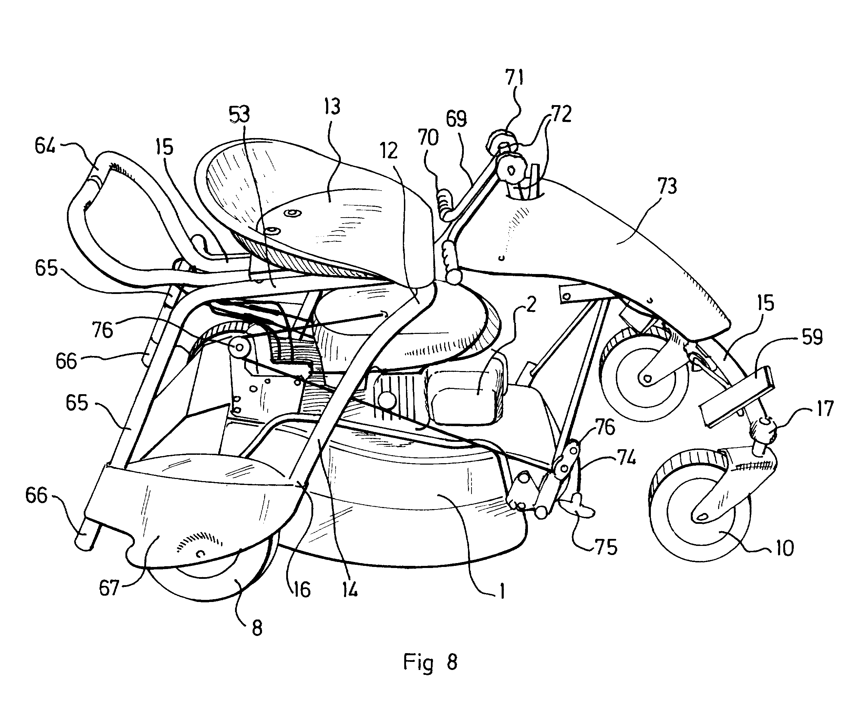

Le deuxième mode de réalisation de l'invention, représenté figure 8, est sensiblement le même que celui des figures précédentes mais présente des formes générales différentes. En particulier, les tubes coudés avant 15 sont prolongés à l'arrière de la platine 53 pour former des poignées 64 permettant de pousser la tondeuse lorsqu'elle repose sur ses roues 8, 10 et alors que le moteur 2 est arrêté. Ces poignées 64 permettent ainsi le roulage de la tondeuse pour la ranger ou la sortir de son rangement. De surcroît, les tubes coudés arrière 14 sont également prolongés vers l'arrière et vers le bas par des prolongements 65 dont l'extrémité 66 vient en regard à l'arrière des roues arrière 8. L'extrémité 16 de la branche avant du tube coudé arrière 14 est reliée à l'extrémité 66 du prolongement 65 par un carénage 67, qui est lui-même articulé à l'arbre 52 de la roue arrière 8. Ce carénage 67 recouvre latéralement la roue arrière 8 et la protège. Les deux extrémités 66 des prolongements 65 des deux tubes arrière 14 et les poignées 64 sont en outre adaptées pour permettre de placer la tondeuse selon l'invention en position verticale relevée en appui sur ces poignées 64 et ces extrémités 66 qui reposent alors sur le sol, les roues avant 10 étant vers le haut. Dans cette position verticale, il est aisé de comprendre que la tondeuse présente un faible encombrement en largeur, ce qui facilite son stockage. De plus, lorsque le châssis secondaire 12 est relevé pour accéder au moteur 2 (comme dans la position représentée figure 7), dans ce deuxième mode de réalisation, le châssis secondaire 12 repose sur le sol non pas directement par le siège 13, mais par les poignées 64.

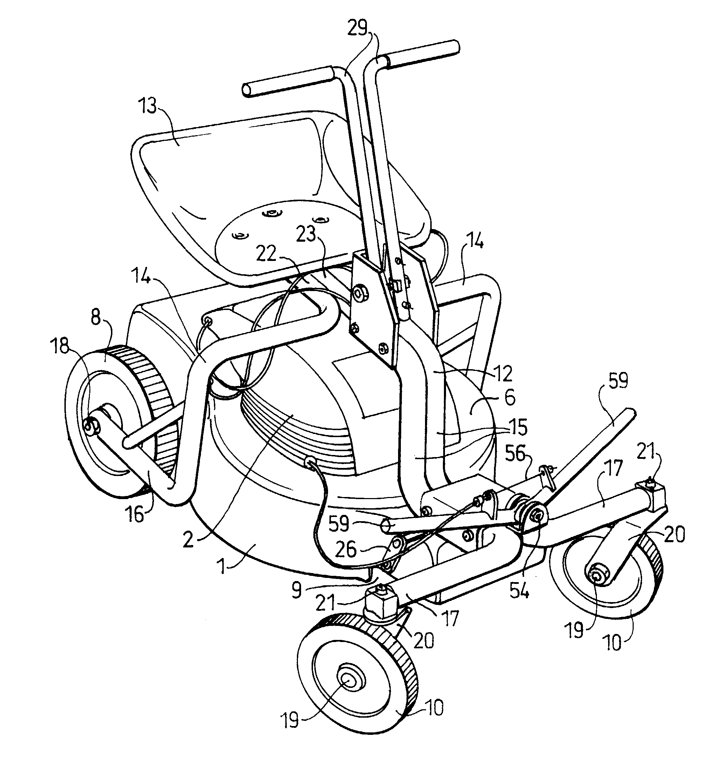

De surcroît, chacun des leviers 29 de pilotage est formé d'une barre terminale 69 comprenant la poignée de manoeuvre 70, et cette barre terminale 69 est fixée par un boulon horizontal 71 à une barre principale 72 de commande, de sorte que la barre terminale 69 peut être placée en position active au moins sensiblement en prolongement de la barre principale 72 de commande pour le pilotage (position semblable à celle représentée figure 1 dans le premier mode de réalisation), soit en position rabattue horizontalement représentée figure 8, de moindre encombrement en hauteur lorsque la tondeuse repose sur ses roues 8, 10 (ou de moindre encombrement en largeur lorsque la tondeuse repose sur les poignées 64 et les extrémités 66). En pratique, l'encombrement de la tondeuse selon l'invention permet son insertion à l'intérieur d'un coffre d'automobile à hayon traditionnel.

Dans le mode de réalisation de la figure 8, il est également prévu un carénage avant 73 qui masque et protège les tubes avant 15, le câble 56 de commande du frein de sécurité provenant des pédales 59, et le mécanisme de suspension du carter de lame 1 au châssis secondaire 12. Il est à noter également que les pédales 59 sont formées de plaques orientées de façon ergonomique, l'axe de pivotement étant incliné par rapport à l'horizontale. En outre, on a représenté figure 8 le câble 74 de démarrage du moteur 2 et sa poignée 75 de manoeuvre ramenée sur la partie avant du carter de lame 1 par des poulies de renvoi 76.

L'invention peut faire l'objet de nombreuses variantes de réalisation par rapport aux modes de réalisation préférentiels sus-décrits et représentés donnés uniquement à titre d'exemple non limitatif. En particulier, il est possible de renverser le sens de fonctionnement de la tondeuse en changeant le sens de rotation de l'essieu moteur 7 (par modification des engrenages du différentiel 28), en retournant le siège 13, en déplaçant les leviers de pilotage 29 et les pédales 59 du côté de l'essieu moteur. L'essieu moteur 7 sera alors à l'avant et les roues directionnelles 10 à l'arrière.

## Revendications

1. Tondeuse à gazon autoportée comprenant :
- au moins trois roues (8, 10) adaptées pour permettre à la tondeuse de rouler, et comprenant au moins une roue directionnelle (10),
- un moteur (2) adapté pour pouvoir entraîner au moins une lame de tonte (3) rotative à axe de rotation au moins sensiblement vertical, et au moins un essieu moteur (7) auquel au moins une roue motrice (8) est accouplée,
- un carter de lame (1) adapté pour circonscrire l'espace balayé par la(les) lame(s) de tonte (3), ce carter de lame (1) comprenant essentiellement une coque rigide portant le moteur (2) et l'essieu moteur (7),
- un siège (13) de réception d'un conducteur, porté par un châssis secondaire (12),
- des moyens (29, 59) de pilotage de la tondeuse par un conducteur assis sur le siège (13),
- le carter de lame (1) et le châssis secondaire (12) formant une structure rigide sur laquelle l'essieu moteur (7) est monté, cette structure rigide étant adaptée pour pouvoir être supportée par les roues (8, 10).
caractérisée en ce que :
- le châssis secondaire (12) est monté directement sur l'essieu moteur (7),
- à l'opposé de l'essieu moteur (7), le châssis secondaire (12) comprend une partie qui s'étend au-delà du carter de lame (1) et est portée directement par chaque roue directionnelle (10), chacune des roues directionnelles (10) étant montée directement sur cette partie du châssis secondaire (12), une partie (9) du carter de lame (1) opposée à l'essieu moteur (7) étant fixée suspendue au châssis secondaire (12), de sorte que le poids du châssis secondaire (12), du siège (13) et du conducteur est directement réparti sur les roues (8, 10) sans générer de contraintes substantielles sur le carter de lame (1).

2. Tondeuse selon la revendication 1, caractérisée en ce que:
- le châssis secondaire (12) est articulé à l'essieu moteur (7) autour d'un axe transversal horizontal (18),
- à l'opposé de l'essieu moteur (7), le carter de lame (1) et le châssis secondaire (12) sont associés rigidement par des moyens (26, 62, 63) d'association adaptés pour autoriser leur dissociation et le pivotement du châssis secondaire (12) par rapport au carter de lame (1) autour dudit axe transversal horizontal (18), en vue de dégager l'accès au moteur (2) porté par le carter de lame (1).

3. Tondeuse selon l'une des revendications 1 ou 2, caractérisée en ce que le châssis secondaire (12) est articulé à l'extérieur de chaque roue (8) de l'essieu moteur (7), selon un axe (18) confondu avec l'axe de rotation de la roue (8).

4. Tondeuse selon l'une des revendications 1 à 3, caractérisé en ce que l'essieu moteur (7) étant un essieu arrière moteur (7), le châssis secondaire (12) est articulé à l'essieu arrière moteur (7) autour d'un axe transversal horizontal arrière (18), en ce que le châssis secondaire (12) s'étend vers l'avant au-delà du carter de lame (1), en ce que la partie avant (9) du carter de lame (1) est fixée suspendue au châssis secondaire (12), et en ce qu'au moins une roue directionnelle avant (10) est montée à l'avant du châssis secondaire (12).

5. Tondeuse selon l'une des revendications 1 à 4, caractérisée en ce que le moteur (2) est porté par le carter de lame (1) en position au moins sensiblement centrale, et de façon à présenter un arbre moteur (4) rotatif s'étendant au moins sensiblement verticalement vers le bas sous le carter de lame (1), en ce qu'une lame de tonte (3) est directement accouplée à l'arbre moteur (4) dont elle est solidaire en rotation, l'axe de rotation de la lame de tonte (3) correspondant à celui de l'arbre moteur (4), et en ce que le châssis secondaire (12) s'étend au-dessus et à l'arrière du moteur (2) de façon que le siège (13) soit disposé au-dessus et à l'arrière du moteur (2).

6. Tondeuse selon l'une des revendications 1 à 5, caractérisée en ce que le châssis secondaire (12) est un châssis tubulaire comportant plusieurs tubes coudés (14, 15), chaque tube (14, 15) ayant une extrémité (16, 17) associée à l'axe de l'une des roues (8, 10), et portée directement par cette roue (8, 10) de la tondeuse, les tubes présentant des portions (14, 15) se rejoignant et reliées entre elles pour former une platine (53) de réception du siège (13).

7. Tondeuse selon la revendication 6, caractérisée en ce que les tubes (15) sont prolongés à l'arrière de la platine (53) pour former des poignées (64) permettant de pousser la tondeuse et s'étendant vers l'arrière sur une distance telle que la tondeuse peut être placée et reposer sur ces poignées (64) en une position verticale de stockage.

8. Tondeuse selon l'une des revendications 1 à 7, caractérisée en ce que l'essieu moteur (7) est entraîné par le moteur (2) par l'intermédiaire d'un mécanisme d'embrayage différentiel réducteur (28), et comprend deux roues motrices (8) accouplées à cet essieu moteur (7), et en ce que le mécanisme d'embrayage différentiel réducteur (28) comprend un boîtier (30) portant :
- un arbre d'entrée (31) recevant le mouvement moteur de l'arbre moteur (4) du moteur (2) par l'intermédiaire d'une transmission,
- deux arbres de sortie (35a, 35b) coaxiaux formant l'essieu moteur (7), chaque arbre de sortie (35a, 35b) entraînant l'une des deux roues motrices (8),
- pour chaque arbre de sortie (35a, 35b), des moyens (37a, 37b, 38a, 38b, 39a, 39b, 40a, 40b, 41a, 41b) d'embrayage de cet arbre de sortie (35a, 35b), indépendamment de l'autre arbre de sortie (35b, 35a), à un organe rotatif (36a, 36b) menant entraîné en rotation par l'arbre d'entrée (31).

9. Tondeuse selon la revendication 8, caractérisée en ce qu'elle comprend pour chaque arbre de sortie (35a, 35b) du mécanisme d'embrayage différentiel réducteur (28), des moyens (46a, 46b) de freinage de cet arbre de sortie (35a, 35b) indépendamment de l'autre arbre de sortie (35b, 35a).

10. Tondeuse selon les revendications 8 et 9, caractérisée en ce qu'elle comprend, pour chaque arbre de sortie (35a, 35b) du mécanisme d'embrayage différentiel réducteur (28), un levier de pilotage (29a, 29b) adapté pour, lorsqu'il est manoeuvré dans un sens, activer les moyens d'embrayage de cet arbre de sortie (35a, 35b), et lorsqu'il est manoeuvré dans un autre sens, activer les moyens (46a, 46b) de freinage de cet arbre de sortie (35a, 35b).

11. Tondeuse selon l'une des revendications 1 à 10, caractérisée en ce que les moyens de pilotage comportent deux leviers de pilotage (29a, 29b) adaptés pour commander indépendamment l'embrayage et/ou le freinage de deux roues motrices (8) de l'essieu moteur (7), et en ce qu'elle comporte au moins une roue directionnelle (10) non motrice montée librement rotative sur un support (20) articulé libre en rotation autour d'un axe (21) au moins sensiblement vertical par rapport au châssis secondaire (12).

12. Tondeuse selon l'une des revendications 10 et 11, caractérisée en ce que chaque levier de pilotage (29) comprend une barre terminale (69) fixée par un boulon (71) au moins sensiblement horizontal à une barre principale (72) de commande, de sorte que la barre terminale (69) peut être placée soit en position active au moins sensiblement en prolongement de la barre principale (72) de commande pour le pilotage, soit en position rabattue horizontalement de moindre encombrement en hauteur.

13. Tondeuse selon l'une des revendications 1 à 12, caractérisée en ce qu'elle comprend un frein de sécurité (55) d'arrêt de lame et deux pédales de commande (59) de ce frein de sécurité (55) montées sur la tondeuse de façon à pouvoir être actionnées par les deux pieds d'un conducteur assis sur le siège (13) et adaptées pour que le frein de sécurité (55) soit actif si l'une au moins des deux pédales de commande (59) n'est pas actionnée, et soit inactif si les deux pédales de commande (59) sont actionnées.

14. Tondeuse selon la revendication 13, caractérisée en ce qu'elle comprend un câble de commande (56) gainé s'étendant entre les pédales de commande (59) et le frein de sécurité (55), en ce que le frein de sécurité (55) est rappelé en position active par des moyens de rappel (58) et est relié à une extrémité de câble de commande de façon à pouvoir être désactivé par une traction exercée sur ce câble de commande (56) à l'encontre des moyens de rappel (58), en ce que l'autre extrémité du câble de commande (56) est reliée à l'une des deux pédales de commande (59) alors qu'une extrémité correspondante de la gaine (60) est reliée à l'autre pédale de commande (59), et en ce que les deux pédales de commande (59) sont montées sur la tondeuse de façon que seul l'actionnement de ces deux pédales de commande (59) provoque une traction du câble de commande (56) par rapport à la gaine (60) apte à désactiver le frein de sécurité (55).

15. Tondeuse selon l'une des revendications 13 et 14, caractérisée en ce que les deux pédales de commande (59) sont articulées sur le châssis secondaire (12) librement pivotantes selon un même axe de rotation (54) contenu dans un plan vertical longitudinal médian.

16. Procédé de fabrication d'une tondeuse à gazon autoportée selon l'une des revendications 1 à 15, dans lequel :
- on part d'une cellule de tondeuse à gazon autotractée comprenant un carter de lame (1) comprenant essentiellement une coque rigide portant un moteur (2) adapté pour pouvoir entraîner au moins une lame de tonte (3) rotative à axe de rotation au moins sensiblement vertical et au moins un essieu moteur (7) auquel au moins une roue motrice (8) est accouplée, et des moyens (29, 59) de pilotage comprenant au moins une commande par câble,
- on forme, avec un châssis secondaire (12), portant un siège (13), et le carter de lame (1), une structure rigide sur laquelle l'essieu moteur (7) est monté et adaptée pour pouvoir être supportée par des roues (8, 10) montées sur cette structure rigide,
caractérisé en ce que :
- on monte le châssis secondaire (12) directement sur l'essieu moteur (7),
- on fixe une partie (9) du carter de lame (1) opposée à l'essieu moteur (7) suspendue à une partie du châssis secondaire (12) qui s'étend au-delà du carter de lame (1) à l'opposé de l'essieu moteur (7),
- on monte au moins une roue directionnelle (10) directement sur ladite partie du châssis secondaire (12) de sorte que le poids du châssis secondaire (12), du siège (13) et du conducteur est directement réparti sur les roues (8, 10) sans générer de contraintes substantielles sur le carter de lame (1).

17. Procédé selon la revendication 16, caractérisé en ce que :
- on articule le châssis secondaire (12) à l'essieu moteur (7) autour d'un axe transversal horizontal (18),
- à l'opposé de l'essieu moteur (7), on associe rigidement le carter de lame (1) et le châssis secondaire (12) par des moyens (26, 62, 63) d'association adaptés pour autoriser leur dissociation et le pivotement du châssis secondaire (12) par rapport au carter de lame (1) autour dudit axe transversal horizontal (18), en vue de dégager l'accès au moteur (2) porté par le carter de lame (1).

18. Procédé selon l'une des revendications 16 ou 17, caractérisé en ce qu'on articule le châssis secondaire (12) à l'extérieur de chaque roue (8) de l'essieu moteur (7) de ladite cellule selon un axe confondu avec l'axe de rotation de la roue (8).

19. Procédé selon l'une des revendications 16 à 18, caractérisé en ce que l'essieu moteur (7) étant un essieu arrière moteur (7), on articule le châssis secondaire (12) à l'essieu arrière moteur (7) autour d'un axe transversal horizontal arrière (18), on fixe la partie avant (9) du carter de lame (1) suspendue au châssis secondaire (12), et en ce qu'on monte au moins une roue directionnelle avant (10) à l'avant du châssis secondaire (12).

20. Procédé selon l'une des revendications 16 à 19, caractérisé en ce qu'on monte sur l'essieu moteur (7) auquel deux roues motrices (8) sont accouplées, un mécanisme d'embrayage différentiel (28) comprenant un boîtier (30) portant :
- un arbre d'entrée (31) recevant le mouvement moteur de l'arbre moteur (4) du moteur (2) par l'intermédiaire d'une transmission,
- deux arbres de sortie (35a, 35b) coaxiaux formant l'essieu moteur (7), chaque arbre de sortie (35a, 35b) entraînant l'une des deux roues (8) motrices,
- pour chaque arbre de sortie (35a, 35b), des moyens (37a, 37b, 38a, 38b, 39a, 39b, 40a, 40b, 41a, 41b) d'embrayage de cet arbre de sortie (35a, 35b), indépendamment de l'autre arbre de sortie (35b, 35a), à un organe rotatif (36a, 36b) menant entraîné en rotation par l'arbre d'entrée (31).

21. Procédé selon la revendication 20, caractérisé en ce qu'on monte sur chaque arbre de sortie (35a, 35b) du mécanisme d'embrayage différentiel réducteur (28), des moyens (46a, 46b) de freinage de cet arbre de sortie (35a, 35b) indépendamment de l'autre arbre de sortie (35b, 35a).

22. Procédé selon l'une des revendications 16 à 21, caractérisé en ce qu'on monte sur le châssis secondaire (12) deux leviers de pilotage (29a, 29b) adaptés pour commander indépendamment l'embrayage et/ou le freinage des deux roues motrices (8) de l'essieu moteur (7), et en ce qu'on monte au moins une roue directionnelle (10) non motrice librement rotative sur un support (20) articulé libre en rotation autour d'un axe (22) au moins sensiblement vertical par rapport au châssis secondaire (12).

23. Procédé selon l'une des revendications 16 à 22, caractérisé en ce qu'on utilise une cellule de tondeuse autotractée comprenant un frein de sécurité (55) d'arrêt de la lame, et en ce que l'on monte sur le châssis secondaire (12) et on relie au frein de sécurité (55) deux pédales de commande (59) de ce frein de sécurité (55) adaptées pour pouvoir être actionnées par les deux pieds d'un conducteur assis sur le siège (13) de telle sorte que ce frein de sécurité (55) est actif si l'une au moins des deux pédales de commande (54) n'est pas actionnée, et inactif si les deux pédales de commande (59) sont actionnées.

24. Kit de mise en oeuvre d'un procédé de fabrication d'une tondeuse à gazon autoportée à partir d'une cellule de tondeuse à gazon autotractée, comprenant un châssis secondaire (12), portant un siège (13), ce châssis secondaire (12) étant adapté pour pouvoir former, avec un carter de lame (1) de la cellule de tondeuse à gazon autotractée, comprenant essentiellement une coque rigide portant un moteur (2) et un essieu moteur (7), une structure rigide sur laquelle l'essieu moteur (7) est monté et qui est adaptée pour pouvoir être supportée par des roues (8, 10),
caractérisé en ce que :
- il comprend des moyens de montage direct du châssis secondaire (12) sur l'essieu moteur (7),
- des moyens de fixation suspendue au châssis secondaire (12) d'une partie (9) du carter de lame (1) opposée à l'essieu moteur (7),
- des moyens de montage direct d'au moins une roue directionnelle (10) directement sur une partie du châssis secondaire (12) adaptée pour s'étendre au-delà du carter de lame (1) à l'opposé de l'essieu moteur (7), de sorte que le poids du châssis secondaire (12), du siège (13) et du conducteur peut être directement réparti sur les roues (8, 10) sans générer de contraintes substantielles supplémentaires sur le carter de lame (1).

25. Kit selon la revendication 24, caractérisé en ce qu'il comprend en outre un mécanisme d'embrayage différentiel (28) comprenant un boîtier (30) portant :
- un arbre d'entrée (31) recevant le mouvement moteur de l'arbre moteur (4) du moteur (2) par l'intermédiaire d'une transmission,
- deux arbres de sortie (35a, 35b) coaxiaux formant l'essieu moteur (7), chaque arbre de sortie (35a, 35b) entraînant l'une des deux roues (8) motrices accouplées à l'essieu moteur (7),
- pour chaque arbre de sortie (35a, 35b), des moyens (37a, 37b, 38a, 38b, 39a, 39b, 40a, 40b, 41a, 41b) d'embrayage de cet arbre de sortie (35a, 35b), indépendamment de l'autre arbre de sortie (35b, 35a), à un organe rotatif (36a, 36b) menant entraîné en rotation par l'arbre d'entrée (31).

26. Kit selon la revendication 25, caractérisé en ce qu'il comprend, montés sur chaque arbre de sortie (35a, 35b) du mécanisme d'embrayage différentiel réducteur (28), des moyens (46a, 46b) de freinage de cet arbre de sortie (35a, 35b) indépendamment de l'autre arbre de sortie (35b, 35a).

27. Kit selon l'une des revendications 24 à 26, caractérisé en ce qu'il comprend deux leviers de pilotage (29a, 29b) montés sur le châssis secondaire (12) et adaptés pour commander indépendamment l'embrayage et/ou le freinage des deux roues motrices (8), et en ce qu'il comprend au moins un support (20) d'au moins une roue directionnelle (10) non motrice librement rotative, ce support (20) étant articulé libre en rotation autour d'un axe (21) au moins sensiblement vertical par rapport au châssis secondaire (12).

28. Kit selon l'une des revendications 24 à 27, caractérisé en ce qu'il comprend deux pédales de commande (59) adaptées pour pouvoir être reliées à un frein de sécurité (55) d'arrêt de lame et montées sur le châssis secondaire (12) pour pouvoir être actionnées par les deux pieds d'un conducteur assis sur le siège (13) de telle sorte que ce frein de sécurité (55) est actif si l'une au moins des deux pédales de commande (54) n'est pas actionnée, et inactif si les deux pédales de commande (59) sont actionnées.
